# EUROPEAN PATENT APPLICATION

(11) **EP 2 514 990 A2**
(43) Date of publication of application: **24.10.2012**
(21) Application number: 12152443.3
(22) Date of filing: 25.01.2012
(51) Int. Cl.: F16D 65/74

(54) **A brake system comprising a retractor**

(30) Priority: 31.01.2011 US 201113017180
(71) Applicant: Deere & Company, Moline, IL 61265-8098 (US)
(72) Inventor: Knowles, Richard N, Waterloo, IA Iowa 50701 (US)
(74) Representative: Dehnhardt, Florian Christopher

(57) **Abstract**

A brake system (10, 32) is provided, the brake system (10, 32) having a brake valve (14) having a first mode and a second mode. A retractor (16, 26) is in fluid communication with the brake valve (14), and a brake assembly (118) is in fluid communication with the retractor (16, 26). When the brake valve (14) is in a first mode, the brake assembly (118) engages, and when the brake valve (14) is in a second mode, the brake retractor (16, 26) disengages the brake assembly (118) via a fluid vacuum.

## Description

The present disclosure relates to a brake system. More specifically, the present disclosure relates to a brake system comprising a retractor for use in a work machine.

A work machine utilizes a drivetrain to transmit power from an engine to a set of wheels. In the drivetrain, a clutch transmits engine power to a transmission, and the transmission transmits power to a final drive. The final drive comprises a differential gearset, planetary gearset a differential housing, and an axle housing. An input shaft transmits power from the differential gearset to the planetary gearset, and an output shaft transmits power from the planetary gearset to the set of wheels. A lubricant is contained within the axle and differential housings, and the planetary gearset and the differential gearset operate in conjunction with the lubricant.

The final drive further comprises a brake system having a brake assembly. In the brake assembly, there is a friction disc splined to the input shaft. To prevent rotation of the friction disc and input shaft, a piston, a piston plate and a reaction plate sandwich the friction disc. The friction disc has grooves on each of its sides to facilitate the flow of the lubricant.

When the brake system is initially assembled, there is a first optimal clearance between the piston and the friction disc, and there is a second optimal clearance between the piston and the reaction plate. The first and second optimal clearances are set to minimize the brake assembly's response times as well as windage losses. Ideally, once the first and second optimal clearances are established, they are maintained over the life of the brake system. However, maintaining the optimal clearances is difficult, because as the brake assembly operates, its components experience wear and the actual clearances become larger than the optimal clearances. When this occurs, the brake system responds relatively slowly.

A brake system typically has a set of three traditional retractors arranged about the outer diameter of the brake piston. They are placed, as such, for separating the brake piston and the reaction plate and for maintaining the optimal clearances. However, such an arrangement is problematic. The tolerance stacks of traditional retractors vary, and as such, traditional retractors apply unequal forces to the piston. This causes the piston to tip within the bore, and when this occurs, traditional retractors must apply large forces to move the piston. Additionally, piston seal drag may occur, which again requires large forces to move the piston. Both of these scenarios-either alone or together-may require more force than is available via traditional retractors for maintaining an optimal clearance. What is needed is a simple, cost effective brake system that is capable of disengaging the brake assembly and maintaining the optimal clearances.

It is therefore the object of the present invention to comply with one or all of these needs.

This object is met according to the invention by the teaching of claim 1, while features developing the solution in an advantageous manner are set forth in the further claims.

Disclosed is a brake system comprising a brake valve having a first mode and a second mode. A retractor is in fluid communication with the brake valve. The retractor comprises a pressure transmission member, a spring, and a housing. The housing has a housing bore, and the pressure transmission member is slideably positioned within the housing bore. The spring is also positioned within the bore and urges the pressure transmission member towards the brake valve. A brake assembly is in fluid communication with the retractor. When the brake valve is in a first mode, the brake assembly engages, and when the brake valve is in a second mode, the spring urges the pressure transmission member away from the brake assembly and the brake assembly disengages via a fluid vacuum.

The disclosed brake system provides two key advantages over traditional brake systems. First, it requires only one retractor per wheel, rather than three per wheel like traditional brake systems. This decrease, from three per wheel to one, lowers component costs and assembly costs. The second key advantage of the disclosed brake system is its packaging flexibility. The retractors of the disclosed brake system can be packaged anywhere between the brake valve and the brake pack, but traditional retractors are packaged within the brake assembly. This increased flexibility allows designers to plan around assembly and maintenance concerns. Further, in the disclosed brake system, the retractors are capable of using large, strong springs for disengaging the brake assembly, unlike traditional retractors that usually require small, weak springs-again, due to packaging requirements-resulting in potentially decreased disengagement characteristics. The above and other features will become apparent from the following description and the attached drawings.

According to a first embodiment the invention includes a brake system, comprising a brake valve having a first mode and a second mode; a retractor, in fluid communication with the brake valve, comprising a pressure transmission member, a spring, and a housing having a housing bore, wherein the pressure transmission member is slideably positioned within the housing bore, and the spring is positioned within the housing bore and urges the pressure transmission member towards the brake valve; and a brake assembly in fluid communication with the retractor, wherein when the brake valve is in a first mode, the brake assembly engages, and when the brake valve is in a second mode, the spring urges the pressure transmission member away from the brake assembly and the brake assembly disengages via a fluid vacuum.

The pressure transmission member may have an opening, and the retractor may further include a self adjusting assembly, the self adjusting assembly comprising an adjustment member slidably positioned within the pressure transmission member, wherein the adjustment member has a groove, an input face, an output face, and an adjustment member opening; a retaining ring positioned in the groove; a ring positioned within the adjustment member such that the ring mates with the retaining ring; and an adjustment spring positioned within the adjustment member and sandwiched between the ring and the output face, wherein the adjustment spring applies an adjustment spring force on the output face.

The retractor may have an input side and an output side, the brake system further comprising a fluid, wherein a portion of the fluid is on the input side and applies an input force on the input face; a portion of the fluid is on the output side and applies an output force on the output face; a friction force exists between the housing bore and the adjustment member; and when the input force is greater than the sum of the output force, the adjustment spring force, and the friction force, a clearance develops between the adjustment member and the pressure transmission member and a quantity of the portion of the fluid on the input side transfers from the input side to the output side via the adjustment member opening.

The brake system may further comprise a conduit positioned fluidly between the brake valve and the retractor; and a retractor conduit positioned fluidly between the retractor and the brake assembly.

The brake system may further comprise a bleed path, the bleed path comprising an inlet bleed passage in fluid communication with the brake valve; a transfer bleed passage; outlet bleed passage in fluid communication with the transfer bleed passage, wherein the transfer bleed passage is fluidly between the inlet bleed passage and the outlet bleed passage; and a bleed plug to prevent fluid communication between the inlet bleed passage and the outlet bleed passage via the transfer bleed passage.

According to another embodiment the invention includes a brake system, comprising a brake valve having a first mode and a second mode; a retractor, in fluid communication with the brake valve, comprising a housing, a pressure transmission member, and a spring, wherein the housing has a housing bore, the pressure transmission member is slideably positioned within the housing bore, the spring is positioned within the pressure transmission member and urges the pressure transmission member towards the brake valve, and the pressure transmission has a coil bore, a projection bore, and an obstruction bore; and a brake assembly in fluid communication with the retractor, wherein when the brake valve is in a first mode, the brake assembly engages, and when the brake valve is in a second mode, the coil urges the pressure transmission member away from the brake assembly and the brake assembly disengages via a fluid vacuum.

The brake system may include a self adjusting assembly comprising an adjustment body having a projection, wherein the adjustment body is positioned within the coil, and the projection is capable of applying a projection force to the obstruction; an obstruction positioned within the obstruction bore; an obstruction retainer; and an obstruction spring positioned within the obstruction bore and sandwiched between the obstruction and the obstruction retainer, wherein the obstruction spring applies an obstruction spring force.

The spring may comprise a first coil spring and a second coil spring, wherein the first and second coil springs sandwich the adjustment body.

The brake system may further comprise a fluid and an adjustment member having an adjustment member and slidably positioned within the pressure transmission member, wherein the retractor has an input side and an output side; a portion of the fluid is on the input side and applies an input force on the obstruction; a portion of the fluid is on the output side and applies an output force on the obstruction; and when the sum of the output force and the projection force is greater than the sum of the input force and the obstruction spring force, a clearance develops between the obstruction and the pressure transmission member and a quantity of the portion of the fluid on the input side transfers from the input side to the output side via the adjustment member opening.

The brake system may further comprise a conduit placed fluidly between the brake valve and the retractor; and a retractor conduit placed fluidly between the retractor and the brake assembly.

The brake system may further comprise a bleed path, the bleed path comprising an inlet bleed passage in fluid communication with the brake valve; a transfer bleed passage; outlet bleed passage in fluid communication with the transfer bleed passage, wherein the transfer bleed passage is fluidly between the inlet bleed passage and the outlet bleed passage; and a bleed plug to prevent fluid communication between the inlet bleed passage and the outlet bleed passage, via the transfer bleed passage, when the bleed plug is installed.

The detailed description of the drawing refers to the accompanying figures in which:
FIG. 1 is a sectional view of a first brake system comprising a first retractor and a brake assembly;
FIG. 2 is an enlarged sectional view of the first retractor and a first self adjusting assembly;
FIG. 3 is a free body diagram of the forces acting on an adjustment member as the first self adjusting assembly adjusts;
FIG. 4 is an enlarged sectional view of the first retractor and of the first self adjusting assembly as the first self adjusting assembly adjusts;
FIG. 5 is a sectional view of a second brake system comprising a second retractor and the brake assembly;
FIG. 6 is an enlarged sectional view of the second retractor and a second self adjusting assembly;
FIG. 7 is a free body diagram of the forces acting on an obstruction as the second self adjusting assembly adjusts; and
FIG. 8 is an enlarged sectional view of the second retractor and of the second self adjusting assembly as the second self adjusting assembly adjusts.

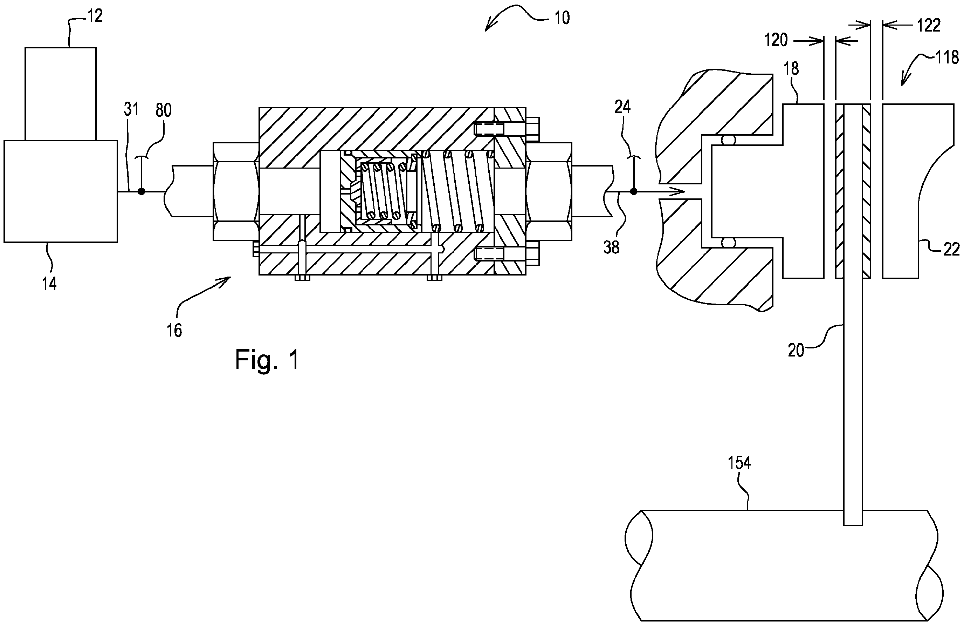

FIG. 1 is a sectional view of a first brake system 10 comprising a first retractor 16 and a brake assembly 118. The first brake system 10 comprises a brake valve 14.
The brake valve 14 has a first mode and a second mode, and the brake valve 14 may be in fluid communication with a brake reservoir 12. A first retractor 16 is in fluid communication with the brake valve 14. The first retractor 16 comprises a first pressure transmission member 44, a spring 62, and a housing 40. The housing 40 has a housing bore 84, and the first pressure transmission member 44 is slideably positioned within the housing bore 84. The spring 62 is positioned within the housing bore 84 and urges the first pressure transmission member 44 towards the brake valve 14.

A brake assembly 118 is in fluid communication with the first retractor 16. When the brake valve 14 is in a first mode, the brake assembly 118 engages. When the brake valve 14 is in a second mode, the spring 62 forces the first pressure transmission member 44 away from the brake assembly 118, and the brake assembly 118 disengages via a fluid vacuum. In the brake assembly 118, there is a friction disc 20 splined to an input shaft 154. To prevent rotation of the friction disc 20 and input shaft 154, a piston 18 and a reaction plate 22 sandwich the friction disc 20.

The first brake system 10 further comprises a fluid. The piston 18 may have a seal, such as an o-ring, to prevent fluid from exiting the first brake system 10. The friction disc 20 has grooves (not shown) on each of its sides to facilitate the flow of the lubricant. When the brake assembly 118 is initially assembled, a first optimal clearance 120 is set between the piston 18 and the friction disc 20, a second optimal clearance 122 and between the friction disc 20 and the reaction plate 22. The first and second optimal clearances 120, 122 are the set to minimizes the response times and windage losses of the brake assembly 118.

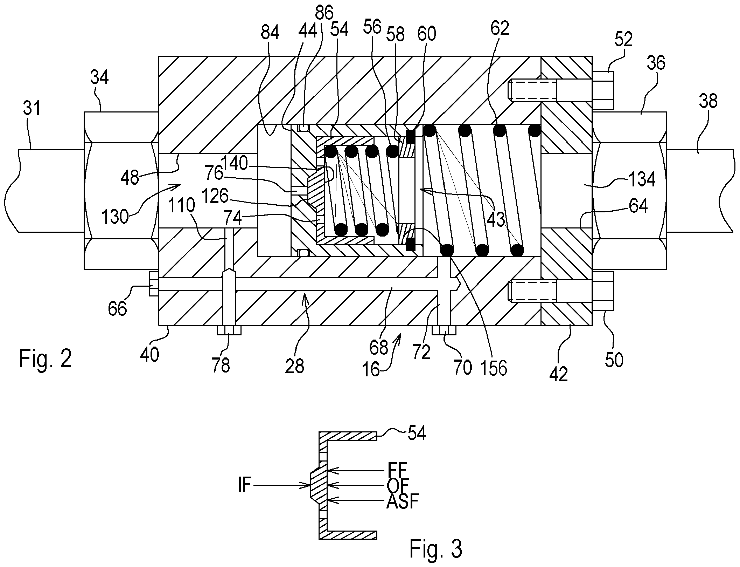

In FIG. 2, there is shown an enlarged sectional view of the first retractor 16. The first retractor comprises an inlet 48 on one side and an outlet 64 on the other side, and the first retractor 16 further comprises a first self adjusting assembly 43. The first pressure transmission member 44 has an opening 76, and the first retractor 16 further includes the first self adjusting assembly 43. The first self adjusting assembly 43 comprises an adjustment member 54 slidably positioned within the first pressure transmission member 44.

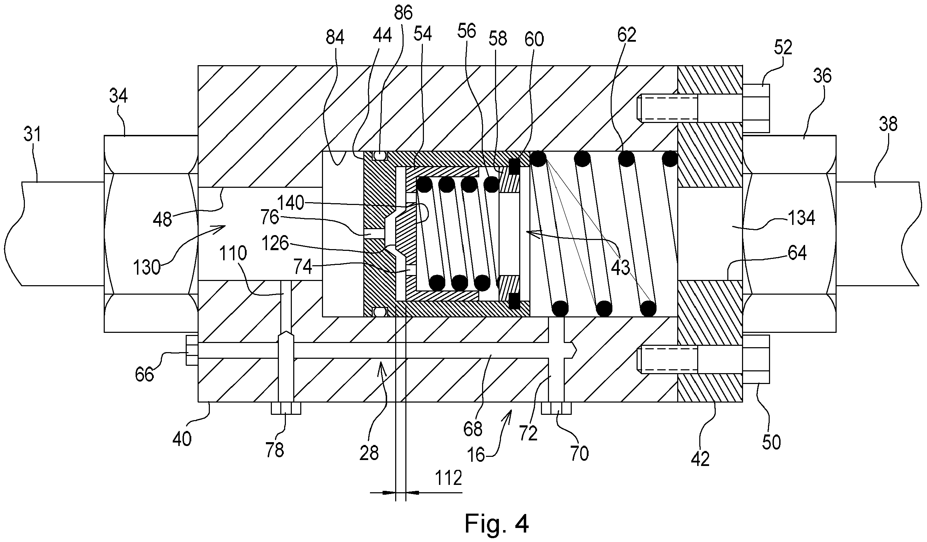

The adjustment member 54 has a groove 156, an input face 126, an output face 140, and an adjustment member opening 74. A retaining ring 60 is positioned within the groove 156. Further, a ring 58 is positioned within the adjustment member 54 such that the ring 58 mates with the retaining ring 60. An adjustment spring 56 is positioned within the adjustment member 54, and further, the adjustment spring 56 is sandwiched between the ring 58 and the output face 140. The adjustment spring 56 applies an adjustment spring force ASF (see FIG. 4) on the output face 140. The adjustment member 54 also comprises an adjustment member opening 76.

A seal 86, such as an o-ring, may be placed about the first pressure transmission member 44. The seal 86 helps the pressure transmission member 44 to move smoothly within the housing 40, and the seal 86 also helps to minimize the passage of fluid through the clearance between the housing bore 84 and the first pressure transmission member 44.

In FIG. 3 there is shown is a free body diagram of the forces acting on the adjustment member 54 as the first self adjusting assembly 43 adjusts. In FIG. 4 there is shown an enlarged sectional view of the first retractor 16 and of the first self adjusting assembly 43 as the first self adjusting assembly 43 adjusts.

The first retractor 16 has an input side 130 and an output side 134. A portion of the fluid is on the input side 130 and applies an input force IF on the input face 126. Further, a portion of the fluid is on the output side 134 and applies an output force OF on the output face 140. Additionally, a friction force FF exists between the housing bore 84 and the adjustment member 54. When the input force IF is greater than the sum of the output force OF, the adjustment spring force ASF, and the friction force FF, a clearance 112 develops between the adjustment member 54 and the first pressure transmission member 44 and a quantity of the portion of the fluid on the input side 130 transfers from the input side 130 to the output side 134 via the adjustment member opening 76. This transfer of fluid ensures that the first brake system 10 has the correct amount of fluid on the output side 134 to maintain the first and second optimal clearances 120, 122.

The first brake system 10 further comprises a conduit 31 positioned fluidly between the brake valve 14 and the first retractor 16 and, further yet, comprises a retractor conduit 38 positioned fluidly between the first retractor 16 and the brake assembly 118. The conduit 31 may be connected to the first retractor 16 via a fitting 34, and the conduit 31 may comprise a bleed valve 80. Likewise, the retractor conduit 38 may be connected to the first retractor 16 via a fitting 36, and the retractor conduit 38 may comprise a bleed valve 24.

The first brake system 10 further includes a bleed path 28. The bleed path 28 comprises an inlet bleed passage 110, in fluid communication with the brake valve 14; a transfer bleed passage 68; and an outlet bleed passage 72, in fluid communication with the transfer bleed passage 68. The transfer bleed passage 68 is fluidly between the inlet bleed passage 110 and the outlet bleed passage 72. A bleed plug 78 prevents fluid communication, between the inlet bleed passage 110 and the outlet bleed passage 72, via the transfer bleed passage 68. The outlet bleed passage may be stopped on one end via a plug 70.

The first retractor 16 may further comprises a plurality of fasteners 50, 52, and a cover 42. The cover 42 has a cover opening 64, and the cover 42 is fastened to the housing 40 via the plurality of fasteners 50, 52.

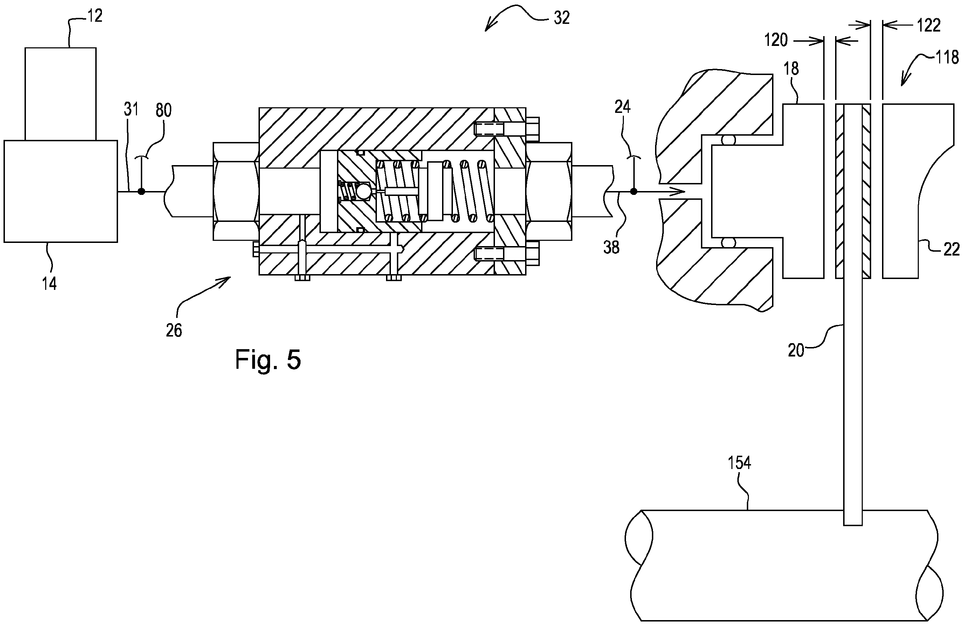

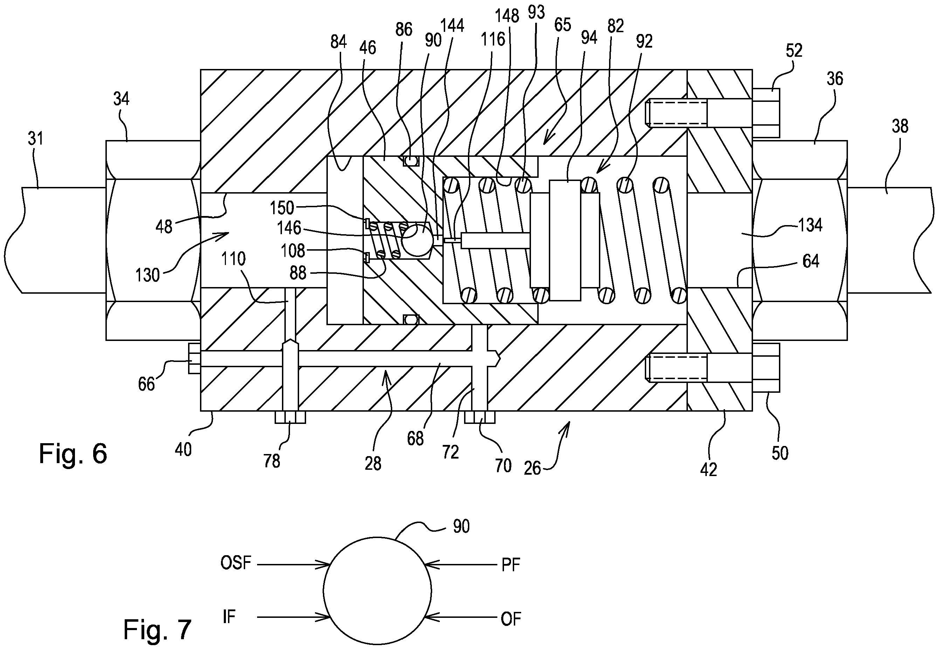

FIG. 5 is a sectional view of a second brake system 32 comprising a second retractor 26 and the brake assembly 118. The second brake system 32 has several components similar in structure and function as the first brake system 10, as indicated by use of identical reference numbers where applicable. FIG. 6 is an enlarged sectional view of the second retractor 26, wherein the second retractor 26 comprises a second self adjusting assembly 65.

The second brake system 32 comprises a brake valve 14 having a first mode and a second mode. A second retractor 26 is in fluid communication with the brake valve 14. The second retractor 26 comprises a housing 40, a second pressure transmission member 46, and a spring 82. The housing has a housing bore 84, wherein the second pressure transmission member 46 is slideably positioned within the housing bore 84, and the spring 82 is positioned within the second pressure transmission member 46. The spring 82 urges the second pressure transmission member 46 towards the brake valve 14. A seal 86, such as an o-ring, may be placed about the first pressure transmission member 44. The seal 86 helps the pressure transmission member 44 move smoothly within the housing 40, and also helps to minimize the passage of fluid traveling through the clearance present between the housing bore 84.

A brake assembly 118 is in fluid communication with the second retractor 26. When the brake valve 14 is in a first mode, the brake assembly 118 engages. Alternatively, when the brake valve 14 is in a second mode, the spring 82 urges the second pressure transmission member 46 away from the brake assembly 118 and the brake assembly 118 disengages via a fluid vacuum.

The second pressure transmission member 46 has a coil bore 148, a projection bore 144, and an obstruction bore 146. The second brake system 32 further comprises a second self adjusting assembly 65. The second self adjusting assembly 65 includes an adjustment body 94 having a projection 116. The adjustment body 94 is positioned within the spring 82, and the projection 116 is capable of applying a projection force PF (see FIG. 7) to the obstruction 90.

An obstruction 90 is positioned within the obstruction bore 146. The second pressure transmission member 46 may have an obstruction retainer groove 150, and an obstruction retainer 108 may be seated in the second pressure transmission member 46. The second self adjusting assembly 65 further includes an obstruction retainer 108 and an obstruction spring 88. The obstruction spring 88 is positioned within the obstruction bore 146 and sandwiched between the obstruction 90 and the obstruction retainer 108. The obstruction spring 88 applies an obstruction spring force OSF (see FIG. 7). The spring 82 may comprise a first coil spring 92 and a second coil spring 93. With such an arrangement, the first coil spring 92 and the second coil spring 93 sandwich the adjustment body 94.

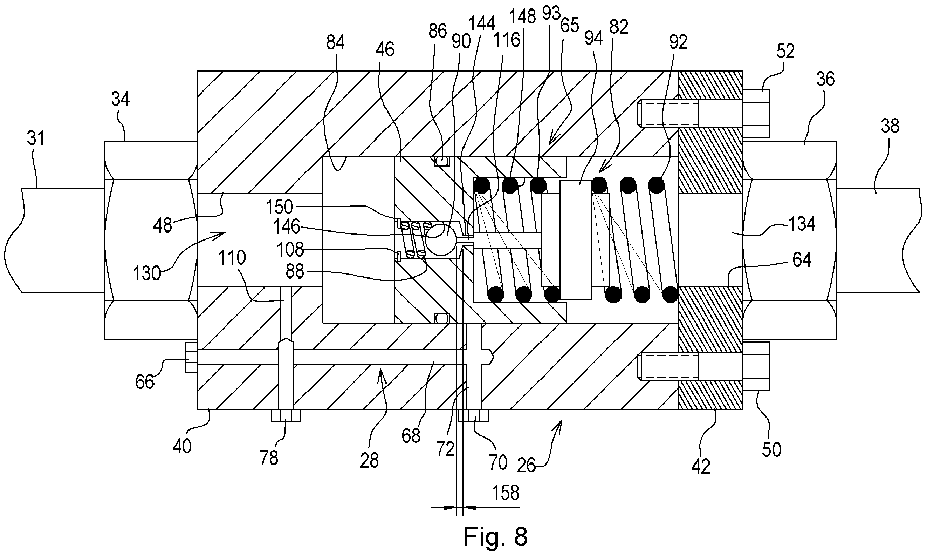

FIG. 7 is a free body diagram of the forces acting on the obstruction 90 as the second self adjusting assembly 65 adjusts, and FIG. 8 is an enlarged sectional view of the second retractor 26 and of the self adjusting assembly 65 as the second self adjusting assembly 65 adjusts.

The second retractor 26 has an input side 130 and an output side 134. A portion of the fluid is on the input side 130 and applies an input force IF on the obstruction 90. Further, a portion of the fluid is on the output side 134 and applies an output force OF on the obstruction 90. When the sum of the output force OF and the projection force PF is greater than the sum of the input force IF and the obstruction spring force OSF, a clearance 158 develops between the obstruction 90, and the second pressure transmission member 46 and a quantity of the portion of the fluid on the input side 130 transfers, from the input side 130, to the output side 134 via the adjustment member opening 76. This transfer of fluid ensures that the second brake system 32 has the correct amount of fluid on the output side 134 to maintain the first and second optimal clearances 120, 122.

The second brake system 32 further comprises a conduit 31 positioned between the brake valve 14 and the second retractor 26, and it also comprises a retractor conduit 38 positioned between the second retractor 26 and the brake assembly 118. A fitting 34 may be used to connect the conduit 31 to the housing 40, and a fitting 36 may be used to connect the housing 40 to the retractor conduit 38.

Further yet, the second brake system 32 comprises a bleed path 28. The bleed path 28 includes an inlet bleed passage 110 in fluid communication with the brake valve 14, a transfer bleed passage 68, and an outlet bleed passage 72. The outlet bleed passage 72 is in fluid communication with the transfer bleed passage 68. The transfer bleed passage 68 is fluidly between the inlet bleed passage 110 and the outlet bleed passage 72. In addition, a bleed plug 78 may be used to prevent fluid communication between the inlet bleed passage 110 and the outlet bleed passage 72, via the transfer bleed passage 68, when the bleed plug 78 is installed. A plug 66 may be use to plug the transfer bleed passage 68.

The second retractor 26 may further comprises a plurality of fasteners 50, 52 and a cover 42. The cover 42 is fastened to the housing 40 via the plurality of fasteners 50, 52. The cover 42 may have a cover opening 64.

While the disclosure has been illustrated and described in detail in the drawings and foregoing description, such illustration and description is to be considered as exemplary and not restrictive in character, it being understood that illustrative embodiments have been shown and described and that all changes and modifications that come within the spirit of the disclosure are desired to be protected. It will be noted that alternative embodiments of the present disclosure may not include all of the features described yet still benefit from at least some of the advantages of such features. Those of ordinary skill in the art may readily devise their own implementations that incorporate one or more of the features of the present disclosure and fall within the spirit and scope of the present invention as defined by the appended claims.

## Claims

1. A brake system (10, 32), comprising:
a brake valve (14) having a first mode and a second mode,
a retractor (16, 26), in fluid communication with the brake valve (14), comprising a pressure transmission member (44, 46), a spring (62, 82), and a housing (40) having a housing bore (84), wherein the pressure transmission member (44, 46) is slideably positioned within the housing bore (84), and the spring (62, 82) is positioned within the housing bore (84) and urges the pressure transmission member (44, 46) towards the brake valve (14); and
a brake assembly (118) in fluid communication with the retractor (16, 26), wherein when the brake valve (14) is in its first mode, the brake assembly (118) engages, and when the brake valve (14) is in its second mode, the spring (62, 82) urges the pressure transmission member (44, 46) away from the brake assembly (118) and the brake assembly (118) disengages via a fluid vacuum.

2. The brake system (10) according to claim 1, **characterized in that** the pressure transmission member (44) has an opening (76), and the retractor (16) further includes a self adjusting assembly (43), the self adjusting assembly (43) comprising:
an adjustment member (54) slidably positioned within the pressure transmission member (44), wherein the adjustment member (54) has a groove (156), an input face (126), an output face (140), and an adjustment member opening (74);
a retaining ring (60) positioned in the groove (156);
a ring (58) positioned within the adjustment member (54) such that the ring (58) mates with the retaining ring (60); and
an adjustment spring (56) positioned within the adjustment member (54) and sandwiched between the ring (60) and the output face (140), wherein the adjustment spring (56) applies an adjustment spring force on the output face (140).

3. The brake system (10) according to claim 1 or 2, **characterized in that** the retractor (16) has an input side (130) and an output side (134), the brake system (10) further comprising a fluid, wherein:
a portion of the fluid is on the input side (130) and applies an input force on the input face (126);
a portion of the fluid is on the output side (134) and applies an output force on the output face (140);
a friction force exists between the housing bore (84) and the adjustment member (54); and
when the input force is greater than the sum of the output force, the adjustment spring force and the friction force, a clearance (112) develops between the adjustment member (54) and the pressure transmission member (44) and a quantity of the portion of the fluid on the input side (130) transfers from the input side (130) to the output side (134) via the adjustment member opening (74).

4. The brake system (32) according to claim 1, **characterized in that** the pressure transmission member (46) has a coil bore (148), a projection bore (144), and an obstruction bore (146), wherein the spring (82) extends into the coil bore (148) of the pressure transmission member (46).

5. The brake system (32) according to claim 4, **characterized in that** the retractor (26) includes a self adjusting assembly (65) comprising
an adjustment body (94) having a projection (116), wherein the adjustment body (94) is positioned within the spring (82), and the projection (116) is capable of applying a projection force to an obstruction (90) positioned within the obstruction bore (146);
an obstruction retainer (108); and
an obstruction spring (88) positioned within the obstruction bore (146) and sandwiched between the obstruction (90) and the obstruction retainer (108), wherein the obstruction spring (88) applies an obstruction spring force.

6. The brake system (32) according to claim 5, **characterized in that** the spring (82) comprises a first coil spring (92) and a second coil spring (93), wherein the first and second coil springs (92, 93) sandwich the adjustment body (94).

7. The brake system (32) according to claim 5 or 6, **characterized by** a fluid, wherein:
the retractor (26) has an input side (130) and an output side (134);
a portion of the fluid is on the input side (130) and applies an input force on the obstruction (90);
a portion of the fluid is on the output side (134) and applies an output force on the obstruction (90); and
when the sum of the output force and the projection force is greater than the sum of the input force and the obstruction spring force, a clearance (158) develops between the obstruction (90) and the pressure transmission member (46) and a quantity of the portion of the fluid on the input side (130) transfers from the input side (130) to the output side (134) via the projection bore (144).

8. The brake system (10, 32) according to one of the claims 1 to 7, **characterized by**
a conduit (31) positioned fluidly between the brake valve (14) and the retractor (16, 26); and
a retractor conduit (38) positioned fluidly between the retractor (16, 26) and the brake assembly (118).

9. The brake system (10, 32) according to one of the claims 1 to 8, **characterized by** a bleed path (28), the bleed path (28) comprising:
an inlet bleed passage (110) in fluid communication with the brake valve (14);
a transfer bleed passage (68);
outlet bleed passage (72) in fluid communication with the transfer bleed passage (68), wherein the transfer bleed passage (68) is fluidly between the inlet bleed passage (110) and the outlet bleed passage (72); and
a bleed plug (78) to prevent fluid communication between the inlet bleed passage (110) and the outlet bleed passage (72) via the transfer bleed passage (68), when the bleed plug (78) is installed.
